# EUROPEAN PATENT SPECIFICATION

(11) **EP 3 929 496 B1**
(45) Date of publication and mention of the grant of the patent: **09.08.2023**
(21) Application number: 20182198.0
(22) Date of filing: 25.06.2020
(51) Int. Cl.: F24F 7/007, A47L 9/00, F24F 7/06, F24F 11/74, F24F 11/89, F04D 29/46, F04D 29/56, F04D 29/66, F24F 13/10, F24F 13/12, F24F 13/14, F24F 13/24, F24F 11/77, F24F 3/16, F24F 3/14, F04D 25/08, F04D 27/00

(54) **AIRFLOW-GENERATING DEVICE WITH ABILITY TO ADJUST AIR CHAMBER AND METHOD APPLIED THERETO**
LUFTSTROMERZEUGUNGSVORRICHTUNG MIT FÄHIGKEIT ZUR EINSTELLUNG DER LUFTKAMMER UND DARAUF ANGEWANDTES VERFAHREN
DISPOSITIF GÉNÉRATEUR DE FLUX D'AIR DOTÉ DE LA CAPACITÉ D'AJUSTER LA CHAMBRE À AIR ET PROCÉDÉ APPLIQUÉ À CE DISPOSITIF

(43) Date of publication of application: 29.12.2021
(73) Proprietor: Power Logic Tech. Inc., New Taipei City 235 (TW)
(72) Inventor: HSU, Wen-Faung, 235 New Taipei City (TW); HSU, Chia-Heng, 235 New Taipei City (TW); HSIEH, Chung-Lin, 235 New Taipei City (TW)
(74) Representative: 2K Patentanwälte Blasberg Kewitz & Reichel

(56) References cited:
- EP-A1- 3 306 217
- EP-A2- 0 186 268
- CN-A- 111 322 259
- DE-A1-102006 035 336
- JP-A- H0 828 946
- US-A1- 2016 045 854
- US-A1- 2017 234 330

## Description

### BACKGROUND OF THE INVENTION

### Field of the Invention

The technical field relates to an airflow-generating device and a method thereof, and more particularly related to an airflow-generating device with ability to adjust an air chamber volume and a method applied thereto.

### Description of Related Art

Existing airflow-generating devices cannot adjust their air chamber volumes. Thus, when an airflow-generating device generates high-speed airflow in a high power operation, an obvious noise will be generated by the high-speed airflow, as the air chamber volume may be too small; on the other hand, when the airflow-generating device generates low-speed airflow in a low power operation, the air exchange rate will become substantially poor, as the air chamber volume may now be too large.

Thus, as existing airflow-generating devices have the above-mentioned problems, there is a need for a more effective solution.

DE 10 2006 035336 A1 discloses a generic airflow-generating device, comprising a volume-adjustable air chamber comprising an inlet structure and outlet structure, and an adjustment unit. The air chamber consists of a housing body and has an inlet connection, to which an inlet pipe for introducing an air flow in the interior of the air chamber can be connected, and an outlet port, through which the air flow from the air chamber can be led out. The air chamber has an open from the housing structure in the space and open connection pipe into which the inlet pipe of the air flow can be inserted and to which an air flow regulating regulator device is connected, wherein the regulator device is disposed in the interior of the air chamber.

### SUMMARY OF THE INVENTION

It is an object of the present invention to provide an airflow-generating device and a corresponding method for use in such an airflow-generating device, configured for efficiently adjusting an air chamber volume based on demands for adapting the different intensities of the airflow.

This problem is solved by an airflow-generating device as claimed by claim 1, and by a method for use in such an airflow-generating device as claimed by claim 11. Further advantageous embodiments are the subject-matter of the dependent claims.

According to the present invention there is provided an airflow-generating device, comprising a volume-adjustable air chamber, an airflow-generating unit and a control unit. The volume-adjustable air chamber comprises an inlet structure, an outlet structure, and an adjustment unit. An air chamber space is formed between the inlet structure and the outlet structure, and a deflector structure for adjusting pressure or direction of airflow is arranged on the outlet structure. The adjustment unit is used (configured) to adjust an inlet-outlet distance between the inlet structure and the outlet structure for adjusting an air chamber volume of the adjustable air chamber. The airflow-generating unit is arranged in the volume-adjustable air chamber and used (configured) to generate the airflow introduced from the inlet structure into the air chamber space and exhausted from the outlet structure. According to the present invention the airflow-generating device further comprises a control unit that is electrically connected to the airflow-generating unit and the adjustment unit, wherein the control unit is configured to control the adjustment unit a) to stretch the inlet-outlet distance for increasing the air chamber volume to improve a noise level caused by the airflow when a rotation rate of the airflow-generating unit speeds up, and b) to shrink the inlet-outlet distance for reducing the air chamber volume to aggrandize the pressure and speed of the airflow when a rotation rate of the airflow-generating unit slows down.

According to the present invention there is also provided a method applied to (for use in) the above airflow-generating device, comprising the following steps: detecting a rotation rate of the airflow-generating unit; retrieving a movement distance corresponding to the rotation rate currently changed of the airflow-generating unit when the rotation rate of the airflow-generating unit is changed; and controlling the adjustment unit to stretch or shrink the inlet-outlet distance based on the movement distance, wherein the inlet-outlet distance is stretched when the rotation rate of the airflow-generating unit speeds up for increasing the air chamber volume to improve a noise level caused by the airflow, and wherein the inlet-outlet distance is shrunk when the rotation rate of the airflow-generating unit slows down for reducing the air chamber volume to aggrandize the pressure and speed of the airflow.

According to the present invention the intensity of the airflow can be increased or the noise of the airflow can be reduced according to the user demand.

### BRIEF DESCRIPTION OF DRAWINGS

The features of the present disclosed example believed to be novel are set forth with particularity in the appended claims. The present disclosed example itself, however, may be best understood by reference to the following detailed description of the present disclosed example, which describes an exemplary embodiment of the present disclosed example, taken in conjunction with the accompanying drawings, in which:
FIG 1 is the schematic view of operation of an airflow-generating device according to the prior art;
Fig. 2A is a first schematic view of operation of the airflow-generating device of a first embodiment of the present invention;
Fig. 2B is a second schematic view of operation of the airflow-generating device of the first embodiment of the present invention;
Fig. 2C is a third schematic view of operation of the airflow-generating device of the first embodiment of the present invention;
Fig. 3A is a first schematic view of operation of an airflow-generating device of a second embodiment of the present invention;
Fig. 3B is a second schematic view of operation of the airflow-generating device of the second embodiment of the present invention;
Fig. 3C is a third schematic view of operation of the airflow-generating device of the second embodiment of the present invention;
Fig. 4 is the architecture diagram of the airflow-generating device of a third embodiment of the present invention;
Fig. 5 is the architecture diagram of the control unit of a fourth embodiment of the present invention;
Fig. 6 is a schematic view of the volume-adjustable air chamber of a fifth embodiment of the present invention;
Fig. 7 is a schematic view of the volume-adjustable air chamber of a sixth embodiment of the present invention;
Fig. 8 is a schematic view of the volume-adjustable air chamber of a seventh embodiment of the present invention;
Fig. 9 is a schematic view of the volume-adjustable air chamber of an eighth embodiment of the present invention;
Fig. 10 is a flowchart of a method of adjusting volume of air chamber of the first embodiment of the present invention;
Fig. 11 is a flowchart of moving based on conditions of a second embodiment of the present invention; and
Fig. 12 is a flowchart of the anomaly detection of a third embodiment of the present invention.

### DETAILED DESCRIPTION OF THE INVENTION

In cooperation with attached drawings, the technical contents and detailed description of the present disclosed example are described thereinafter according to a preferred embodiment, not being used to limit its executing scope. Any equivalent variation and modification made according to appended claims is all covered by the claims claimed by the present disclosed example.

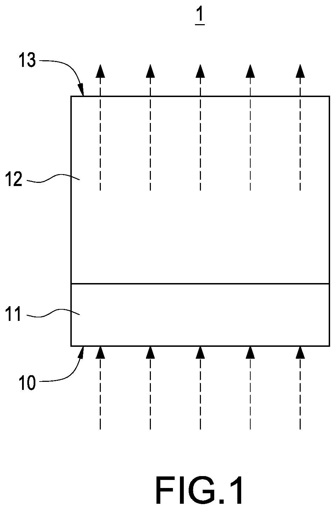

Please refer to Fig.1. FIG 1 is a schematic view of operation of an airflow-generating device according to the prior art. Fig. 1 is used to clearly explain the problems mainly solved by the present invention.

As shown in FIG 1, the existing airflow-generating device 1 generates airflow by operating the fan 11, so as to inhale air from the inlet 10 into the air chamber 12 and discharge air from the outlet 13. Moreover, the intensities of airflow and noise can be determined by the volume of the air chamber 12.

More specifically, because the volume of the air chamber 12 is fixed and unchangeable, the intensity of noise (such as wind noise) generated at the outlet 13 will significantly increase when the fan 11 enhances its operational power to intensify the airflow (instantaneous displacement) over the load of the air chamber 12; the wind speed and pressure at the outlet 13 significantly lowers and the air exchange rate becomes substantially poor when the fan 11 reduces its operational power to lower the intensity of the airflow far below the load of air chamber 12.

To solve the above-mentioned problem, an airflow-generating device with ability to adjust air chamber volume (hereinafter the airflow-generating device for abbreviation) and a method applied thereto are provided by the present disclosed example.

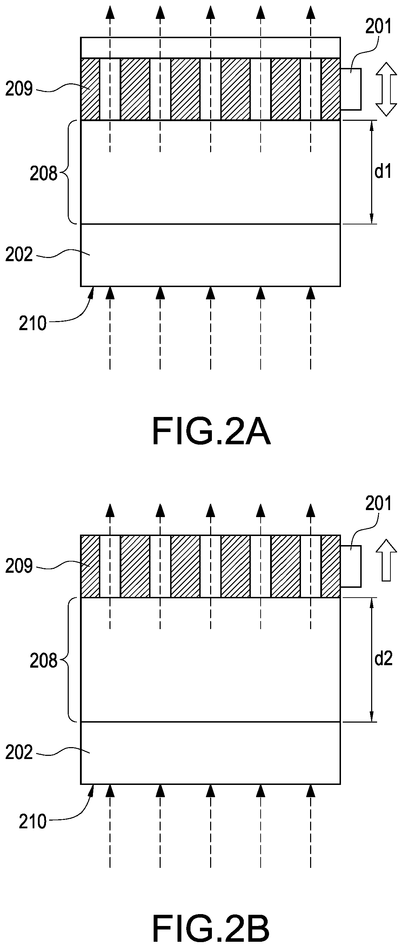

Please refer to Fig. 2A to Fig. 2C together. In this embodiment, as shown in Fig. 2A, the airflow-generating device mainly comprises a volume-adjustable air chamber and an airflow-generating unit 202 (such as fan device).

The volume-adjustable air chamber may comprise an inlet structure 210, an outlet structure 209, an air chamber space 208 and an adjustment unit 201. The air chamber space 208 is formed by the inlet structure 210 and the outlet structure 209. The adjustment unit 201 is used to adjust an inlet-outlet distance between the inlet structure 210 and the outlet structure 209 (such as the inlet-outlet distance d1 shown in Fig. 2A) for adjusting the volume of the air chamber space 208.

In this implement aspect, the inlet structure 210 is fixedly arranged (namely, the installation position of the inlet structure 210 is unmovable). The adjustment unit 201 is physically connected to the outlet structure 209, and has the ability to move the outlet structure 209 to approach to the inlet structure 210 or keep away from the inlet structure 210 for adjusting the inlet-outlet distance.

The airflow-generating unit 202 is exemplarily installed in the volume-adjustable air chamber and used to generate the airflow introduced from the inlet structure 210 into the air chamber space 208 and exhausted from the outlet structure 209.

In one of the embodiments, at least one deflector structure (such as a plurality of deflector holes shown in Fig. 2A) are on the outlet structure 209, and the above deflector structure can adjust the pressure (such as adjusting the aperture of each deflector hole) or the direction (such as adjusting the orientation in which each hole faces) of the above-mentioned airflow.

As shown in Fig. 2B, when the user needs to increase the volume of the air chamber space 208, such as when the noise caused by the strong airflow generated by the high rotation rate of the airflow-generating unit 202 is too loud, the operation may be executed (such manual operation by the user or automatic adjustment by the airflow-generating device) to control the adjustment unit 201 to move the outlet structure 209 in a direction keeping away from the inlet structure 210, so as to increase the inlet-outlet distance as d2, the volume of the air chamber space 208 is increased, weakening the noise caused by the airflow.

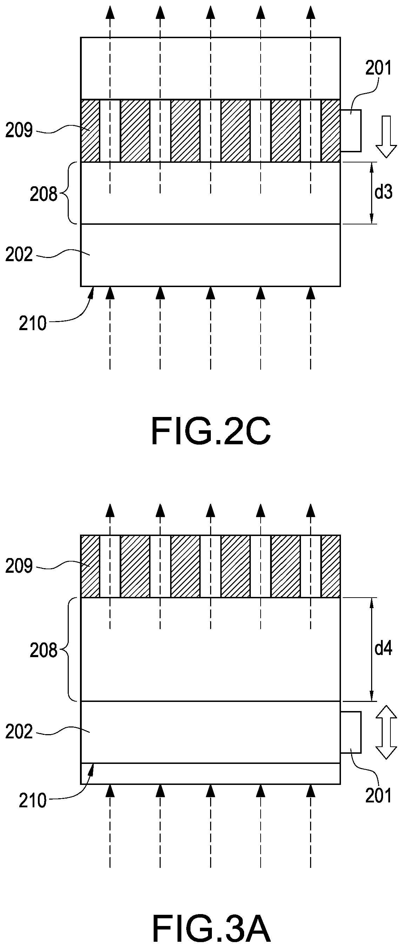

As shown in Fig. 2C, when the user needs to reduce the volume of the air chamber space 208, such as when there is a poor air exchange rate caused by the weak airflow generated by the low rotation rate of the airflow-generating unit 202, the operation may be executed (such manual operation by the user or automatic adjustment by the airflow-generating device) to control the adjustment unit 201 to make the outlet structure 209 to move in a direction of approaching to the inlet structure 210, so as to reduce the inlet-outlet distance as d3, the volume of the air chamber space 208 is reduced, the wind speed and the pressure is increased, improving the air exchange rate.

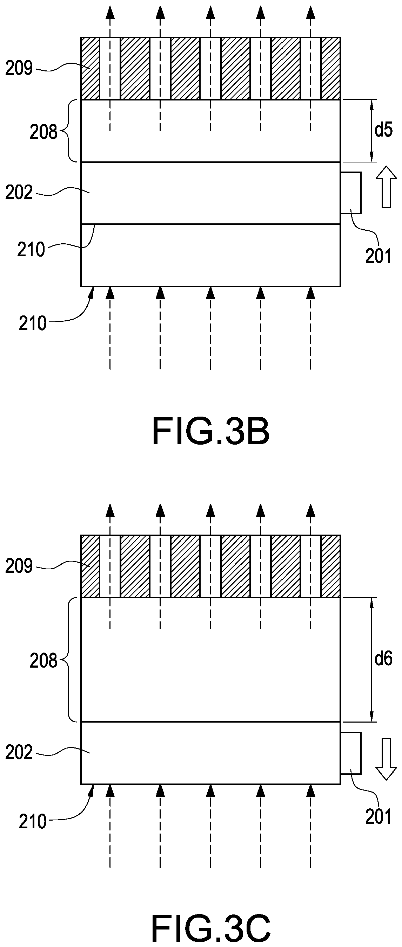

Please refer to Fig. 3A to 3C together. In comparison with the first embodiment shown in Figs. 2A to 2C, in this embodiment, the outlet structure 209 is fixedly arranged (namely, the installation position of the outlet structure 209 is unmovable). The adjustment unit 201 is physically connected to the inlet structure 210, and has the ability to move the inlet structure 210 (the airflow-generating unit 202 may be moved together) towards the outlet structure 209 or away from the outlet structure 209 for adjusting the inlet-outlet distance. In Fig. 3A, the inlet-outlet distance is expressed by d4.

As shown in Fig. 3B, when the user needs to reduce the volume of air chamber space 208, the operation may be executed (such manual operation by the user or automatic adjustment by the airflow-generating device) to control the adjustment unit 201 to move the inlet structure 210 in a direction of approaching to the outlet structure 209 (in an example, only the airflow-generating unit 202 is moved), so as to reduce the inlet-outlet distance as d5, the volume of the air chamber space 208 is reduced, the wind speed and the pressure is increased, improving the air exchange rate.

As shown in Fig. 3B, when the user needs to increase the volume of air chamber space 208, the operation may be executed (such manual operation by the user or automatic adjustment by the airflow-generating device) to control the adjustment unit 201 to move the inlet structure 210 in a direction away from the outlet structure 209, so as to increase the inlet-outlet distance as d6, the volume of the air chamber space 208 is increased, weakening the noise caused by the airflow.

Please note that although the above embodiment takes it for example that the adjustment unit 201 is connected to either the inlet structure 210 or the outlet structure 209, this specific example is not intended to limit the scope of the present disclosed embodiment.

In one of the embodiments of the present invention, the adjustment unit 201 may be configured to be physically connected to the inlet structure 210 and the outlet structure 209 simultaneously, and drive the inlet structure 210 and the outlet structure 209 to move simultaneously for adjustment of the inlet-outlet distance.

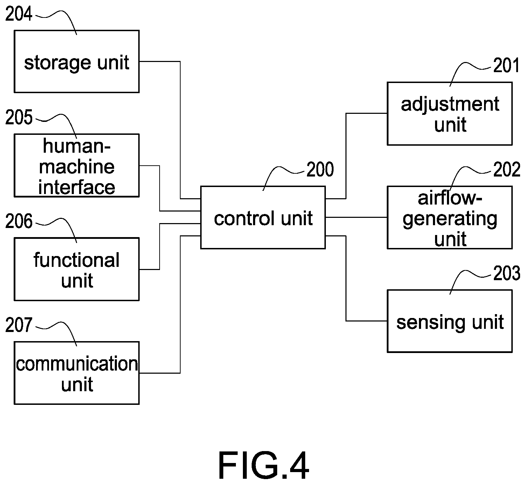

Please refer to Fig. 4. Fig. 4 is the architecture diagram of an airflow-generating device of a third embodiment of the present invention. Fig. 4 further shows the electronic module architecture of the airflow-generating device.

More specifically, in addition to comprising the adjustment unit 201 and the airflow-generating unit 202, the airflow-generating device may further comprise a sensing unit 203, a storage unit 204, a human-machine interface 205, a communication unit 207 and a control unit 200 electrically connected to the above components.

The sensing unit 203 is used to sense the environmental parameters. In one of the implement aspects, the sensing unit 203 is an anemometer, installed on the outlet structure 209, and used to sense the wind speed reading value of the airflow flowing through the outlet structure 209. In one of the implement aspects, the sensing unit 203 is a barometer, installed on the outlet structure 209, and used to sense the air pressure value of the airflow flowing through the outlet structure 209. In one of the implement aspects, the sensing unit 203 is a decibel meter, installed on the outlet structure 209, and used to sense the noise reading value of the airflow flowing through the outlet structure 209.

The storage unit 204 is used to store data. The human-machine interface 205, such as a display, indicator, button, touch screen, or any combination of the above interfaces, is used to interact with the user. The communication unit 207, such as an NFC module, Bluetooth module, Wi-Fi module, cellular network module, Zigbee module, Ethernet module, infrared transceiver or any combination of the above communication devices, is used to communicate with the external device.

In one of the embodiments, the communication unit 207 may be connected to the network and connected to the user device and/or cloud server by the network to receiving commands or update based on the user device and/or cloud server, so as to implement the remote control or automatically update.

In one of the embodiments, the user may operate the user device, such as the remote controller or the networking mobile device installed the designated application program, to generate and send the operational command to the communication unit 207. The control unit 200 may control the airflow-generating device based on the received operational command, such as turning on/off the airflow-generating unit 202, adjusting the operational parameters of the airflow-generating unit 202, reporting the operational parameters, and so forth.

In one of the embodiments, the airflow-generating device may comprise a case, and the case may partially or completely cover the airflow-generating device for providing the protection.

The control unit 200 is used to control the operation of each component of the airflow-generating device.

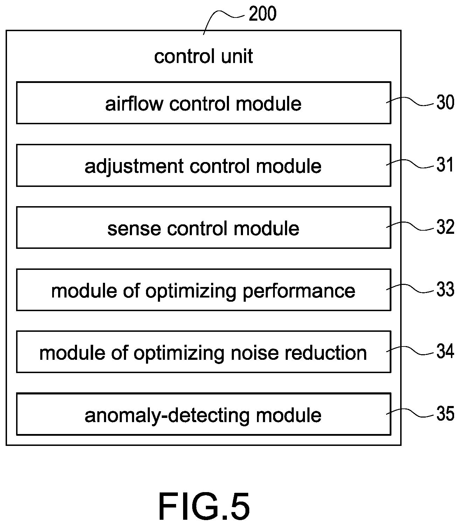

Please refer to Fig. 5. In the embodiment shown in Fig. 5, the control unit 200 of the airflow-generating device may comprise the following modules for implementing the different functions.
1. The Airflow control module 30, is configured to adjust the operational parameters (such as the rotation rate or the electronic power) of the airflow-generating unit 202 for controlling the operational status of the airflow-generating unit 202.
2. The adjustment control module 31, is configured to control the adjustment unit 201 for adjustment of the inlet-outlet distance between the inlet structure 210 and the outlet structure 209.

In one of the exemplary embodiments, the adjustment control module 31 may be configured to automatically control the adjustment unit 201 to stretch the inlet-outlet distance when the rotation rate of the airflow-generating unit 202 speeds up for increasing the volume of the air chamber space 208 and reducing the noise caused by the airflow. The adjustment control module 31 may further be configured to automatically control the adjustment unit 201 to shrink the inlet-outlet distance when the rotation rate of the airflow-generating unit 202 slows down for reducing the volume of the air chamber space 208 and aggrandizing the pressure and speed of the airflow.
3. The sense control module 32, is configured to retrieve the sensed reading values from the sensing unit 203.
4. The module of optimizing performance 33, is configured to be triggered under a mode of optimizing performance, and the module of optimizing performance 33 is configured to retrieve the sense reading values related to the performance (such as the wind speed reading values or the air pressure reading values) continuously from the sensing unit 203, controlling the adjustment unit 201 to increase or reduce the above-mentioned inlet-outlet distance until a threshold condition is matched, such as the current wind reading value being matched with a threshold condition for wind speed (such as a default wind speed reading), or the current air pressure reading value being matched with a threshold condition for air pressure (such as a default air pressure reading. Thus, the present disclosed example can ensure that the airflow-generating device provides the performance matched with the user's expectation.
5. The module of optimizing noise reduction 34, is configured to be triggered under a mode of optimizing noise reduction, and the module of optimizing noise reduction 34 is configured to retrieve the noise reading values from the sensing unit 203 continuously, controlling the adjustment unit 201 to increase or reduce the inlet-outlet distance until the noise reading value is matched with a threshold condition for noise (such as a designated decibel value). Thus, the present disclosed example can ensure that the noise generated by the airflow-generating device is acceptable by the user.
6. The anomaly-detecting module 35, is configured to detect whether there is any abnormal situation happening during the adjustment unit 201 adjusting the inlet-outlet distance, and controls the adjustment unit 201 to discontinue the adjustment of the inlet-outlet distance for preventing the adjustment unit 201 or the other components from damage caused by the anomaly when any abnormal situation is detected.

Please note that the above-mentioned modules 30-35 are connected to each other (such as by electrical connection or information link), and each module 30-35 could be a hardware module (such as electronic circuit module, integrated circuit module, SoC, etc.), a software module or a combination of the hardware module and the software module, this specific example is not intended to limit the scope of the present disclosed example.

Please note that if each of the above-mentioned modules 30-35 is a software module, such as firmware, operating systems or application programs, the storage unit 204 may comprise a non-transitory computer-readable media. The non-transitory computer-readable media stores a computer program. The computer program records a plurality of computer-readable codes. When the control unit 200 executes the above computer-readable codes, the control functions of the corresponding above-mentioned modules 30-35 can be achieved.

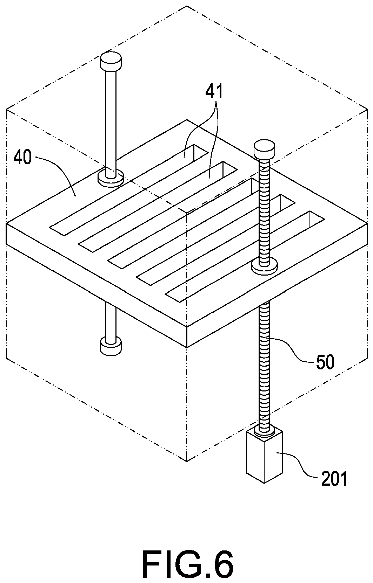

Please refer to Fig. 3A to Fig. 3C and Fig. 6 together. In this embodiment, the adjustment unit 201 is a screw structure device, the deflector structure 40 of the outlet structure 209 comprises a plurality of plane holes 41.

More specifically, at least one screw structure 50 is installed through the deflector structure 40 and is perpendicular to the deflector structure 40. In the example shown in Fig. 6, one screw structure 50 and one guide rod are installed through the deflector structure 40 and is perpendicular to the deflector structure 40 for reducing the number of the screw structure 50 necessary to be rotated and for maintaining the balance while moving. The adjustment unit 201 may comprise the motor and the other transmission parts, and can turn the screw structure 50 for lifting the deflector structure 40 (or the whole outlet structure 209). Namely, the adjustment unit 201 makes the deflector structure 40 approach or move away from the inlet structure 210.

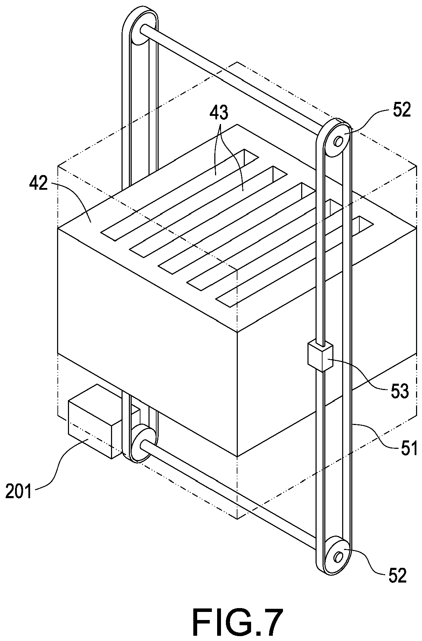

Please refer to Fig. 3A to Fig. 3C and Fig. 7 together. In this embodiment, the adjustment unit 201 is a belt driving device, and the deflector structure 42 of the outlet structure 209 comprises a plurality of stereo holes 43.

More specifically, the moving block 53 is fixedly installed on the deflector structure 42 and the drive belt 51. The adjustment unit 201 may comprise the motor or the other transmission parts, and may rotate the drive component 52 to drive the drive belt 51, so as to lift the moving block 53 and the deflector structure 42 (or the whole outlet structure 209). Namely, the adjustment unit 201 makes the deflector structure 42 approach or move away from the inlet structure 210.

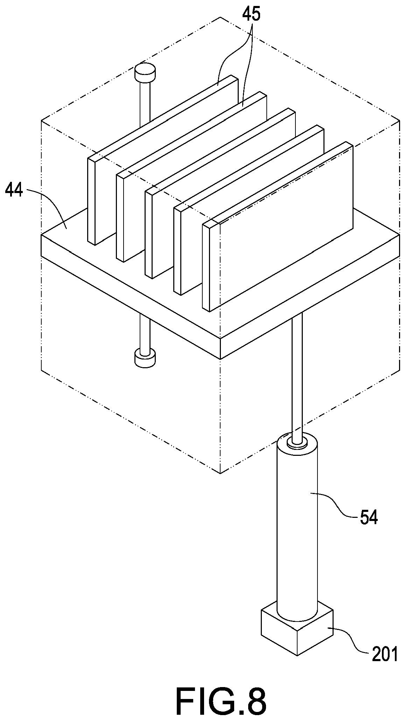

Please refer to Fig. 3A to Fig. 3C and Fig. 8 together. In this embodiment, the adjustment unit 201 is a pneumatic telescopic rod device, and the deflector structure 44 of the outlet structure 209 comprises a plurality of stereo deflectors 45.

More specifically, at least one pneumatic telescopic rod 54 is installed through the deflector structure 44 and is perpendicular to the deflector structure 44. In the example shown in Fig. 8, one pneumatic telescopic rod 54 and one guide rod are installed through the deflector structure 44 and is perpendicular to the deflector structure 44 for reducing the number of the pneumatic telescopic rod 54 necessary to be stretched and for maintaining the balance while moving. The adjustment unit 201 may comprise the pneumatic parts, and can stretch or shrink the pneumatic telescopic rod 54 for lifting the deflector structure 44 (or the whole outlet structure 209). Namely, the adjustment unit 201 makes the deflector structures 44 approach or move away from the inlet structure 210.

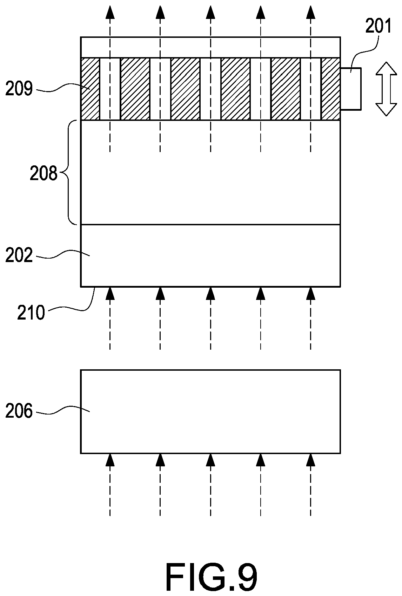

Please refer to Fig. 4 and Fig. 9 together. In this embodiment, as shown in Fig. 4, the airflow-generating device further comprises a functional unit 206 electrically connected to the control unit 200. The functional unit 206 is used to implement a designated function, such as a purification function, heating function, cooling function, dehumidification function, vacuum cleaning function, etc.

As shown in Fig. 9, the functional unit 206 is arranged at a position which the airflow flows through before the inlet structure 210, the functional unit 206 is used to process the air before the inlet structure 210, the airflow-generating unit 202 introduces the air being processed in the air chamber space 208, and the air flows out from the outlet structure 209.

In one of the embodiments, the functional unit 206 is an air purification device and may comprise a filter module. The effect of air purification can be achieved when the air is introduced by the airflow-generating unit 202 and goes through the filter module.

In one of the embodiments, the functional unit 206 is an air heating device and comprises a heating module. The effect of warm room can be achieved when the air is introduced by the airflow-generating unit 202 and goes through the heating module.

In one of the embodiments, the functional unit 206 is an air-cooling device and comprises a cooling module. The effect of cold room can be achieved when the air is introduced by the airflow-generating unit 202 and goes through the cooling module.

In one of the embodiments, the functional unit 206 is an air dehumidification device and comprises a dehumidifying module for absorbing moisture in the ambient air for generating dry air, a heating module for evaporating the moisture absorbed by the dehumidifying module for making the dehumidifying module maintain the ability to absorb moisture, and a heat exchanging module for condensing and collecting the evaporated moisture (water vapor). The effect of dehumidification can be achieved when the air is introduced by the airflow-generating unit 202 and goes through the air dehumidification device.

In one of the exemplary embodiments, the functional unit 206 is a vacuum cleaner device and comprises a vacuum cleaning module for absorbing trash or dust on the floor, and a dust collection module for collecting the trash or dust being absorbed. The effect of cleaning can be achieved when the trash or dust is inhaled by the airflow in the vacuum cleaning module, the trash or dust is filtered out and collected in the dust collection module, and only the air goes through the volume-adjustable air chamber.

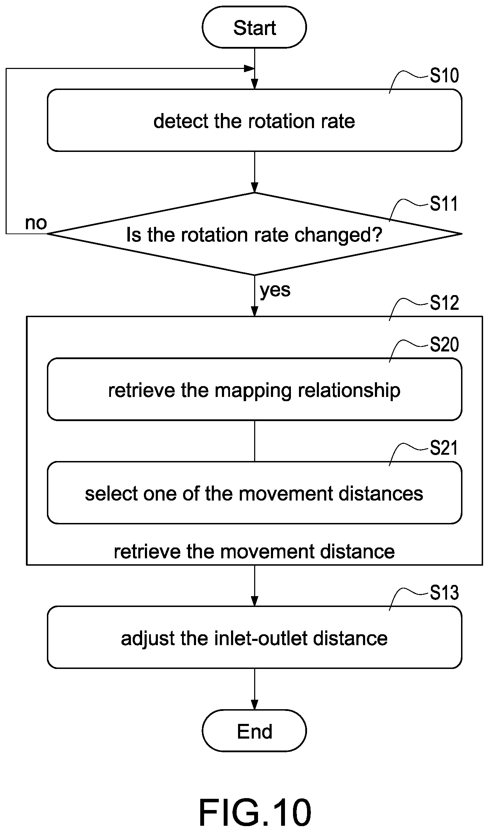

Please refer to Fig. 10 showing the flowchart of a method of adjusting volume of air chamber of the first embodiment of the present invention. The method of adjusting volume of air chamber of each embodiment of the present invention may be implemented by any of the airflow-generating devices shown in Figs. 2A to 9.

The method of adjusting volume of air chamber of this embodiment comprises following steps.

Step S10: the control unit 200 executes the airflow control module 30 to detect the rotation rate of the airflow-generating unit 202, such as retrieving the operational parameters of the airflow-generating unit 202.

Step S11: the control unit 200 executes the airflow control module 30 to detect whether the rotation rate of the airflow-generating unit 202 is changed, such as if any operational parameter is changed.

If the rotation rate of the airflow-generating unit 202 is not changed, it is unnecessary to adjust the volume of the air chamber space 208. The control unit 200 executes the step S10 again for continuous detection.

If the rotation rate of the airflow-generating unit 202 is changed, there is a need to adjust the volume of the air chamber space 208, the control unit 200 executes the step S12: the control unit 200 executing the adjustment control module 31 to retrieves the movement distance of moving the outlet structure 201 (and/or the inlet structure 210) for this change of the rotation rate.

In one of the exemplary embodiments, a plurality of values of the rotation rates respectively correspond to a plurality of different movement distances (such as 1 centimeter, 3 centimeters or 5 centimeters). The control unit 200 is configured to retrieve the movement distance corresponding to the current changed rotation rate of the airflow-generating unit 202.

In one of the exemplary embodiments, the storage unit 204 records a mapping relationship (such as being stored in a form of lookup table) between a plurality of rotation rate configurations (such as the above-mentioned operational parameters) for the airflow-generating unit 202 and a plurality of movement distances for the adjustment unit 201. the control unit 200 may retrieve the movement distance by following steps S20-S21.

Step S20: the control unit 200 executes the adjustment control module 31 to load the mapping relationship from the storage unit 204.

Step S21: the control unit 200 executes the adjustment control module 31 to select one of the movement distances (such as selection based on the lookup table) based on the retrieved mapping relationship and rotation rate configuration currently used by the airflow-generating unit 202.

Step S13: the control unit 200 executes the adjustment control module 31 to control the adjustment unit 201 to adjust the inlet-outlet distance based on the movement distance being selected.

In one of the exemplary embodiments, the control unit 200 is configured to stretch the inlet-outlet distance for increasing the volume of the air chamber space 208 and improving the noise level of the airflow when the rotation rate of the airflow-generating unit 202 is increased. Moreover, the control unit 200 is configured to shrink the inlet-outlet distance for reducing the volume of the air chamber space 208 and aggrandizing the pressure and speed of the airflow when the rotation rate of the airflow-generating unit 202 is reduced.

Thus, the present disclosed example can increase the intensity of the airflow or reduce the noise of the airflow according to the user demand.

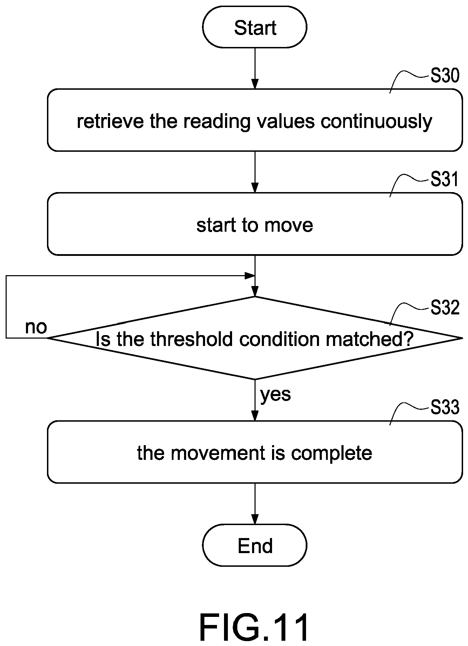

Please refer to Fig. 11. Fig. 11 is the flowchart of movement based on the condition of the second embodiment of the present invention. A function of conditional movement is provided in this embodiment which is to continuously adjust the inlet-outlet distance until the default threshold condition is matched, so as to provide the user a better user experience. More specifically, the method of adjusting volume of air chamber of this embodiment further comprises following steps.

Step S30: the control unit 200 retrieves the reading values from the sensing unit 203 continuously.

In one of the exemplary embodiments, the present disclosed example further provides a function of optimizing performance, with the ability to adjust the volume of the air chamber space 208 based on the current rotation rate of the airflow-generating unit 202 for providing the best effect of air exchange rate currently. More specifically, the sensing unit 203 may be an anemometer or a barometer, and the control unit 200 may execute the module of optimizing performance 33 to retrieve the wind speed reading values or the air pressure reading values of the airflow at the outlet structure 209 continuously.

In one of the exemplary embodiments, the present disclosed example further provides a function of optimizing noise reduction with the ability to adjust the volume of the air chamber space 208 based on the current rotation rate of the airflow-generating unit 202 for minimizing the noise caused by the airflow. More specifically, the sensing unit 203 may be a decibel meter, and the control unit 200 may execute the module of optimizing noise reduction to retrieve the noise reading values of the airflow at the outlet structure 209 from the sensing unit 203 continuously.

Step S31: the control unit 200 executes the adjustment control module 31 to control the adjustment unit 201 to start to move the inlet structure 210 and/or the outlet structure 209 for stretching or shrinking the inlet-outlet distance.

Step S32: the control unit 200 determines whether the default threshold condition is matched. More specifically, as the volume of the air chamber space 208 increases or decreases, the reading value of the sensing unit 203 will change accordingly. The control unit 200 is configured to determine whether the current reading value of the sensing unit 203 is matched with the above-mentioned threshold condition (such as a default reading value).

In one of the exemplary embodiments, when the function of optimizing performance is provided, the control unit 200 may determine by the module of optimizing performance 33 whether the current wind speed reading value matches the default wind speed threshold condition (such as the current wind speed reading value being higher than a default wind speed value), or the current air pressure reading value matches the default air pressure threshold condition (such as the current air pressure reading value being higher than a default air pressure value). The above-mentioned default wind speed value or default air pressure value may be values with the ability to provide the best operational effect based on the current rotation rate.

In one of the exemplary embodiments, when the function of optimizing noise reduction is provided, the control unit 200 may determine by the module of optimizing noise reduction 34 whether the current noise reading value matches the default noise threshold condition (such as the current noise reading value being weaker than a default noise value). The above-mentioned default noise value may be a value with the ability to provide a normal noise level or lower noise level based on the current rotation rate.

Step S33: when the default threshold condition is matched, the control unit 200 executes the adjustment control module 31 to control the adjustment unit 201 to stop moving the inlet structure 210 and/or the outlet structure 209 for stopping the movement of the above-mentioned inlet-outlet distance.

Thus, the present disclosed example can provide the better user experience.

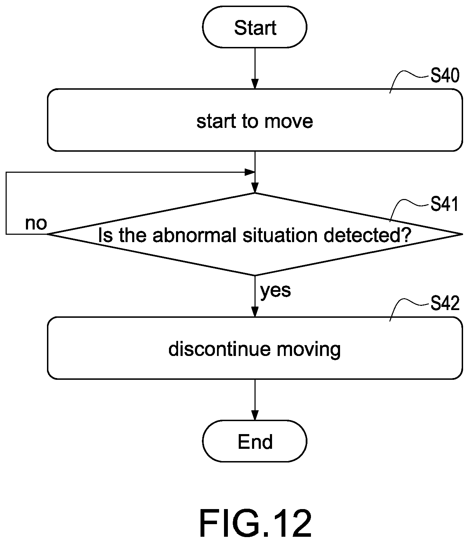

Please refer to Fig. 12. Fig. 12 is the flowchart of the anomaly detection of the third embodiment of the present invention. A function of anomaly detection is provided in this embodiment with the ability to detect whether any abnormal situation happens during operation of the adjustment unit 201 for preventing the airflow-generating device from damage, such as failure of the adjustment unit 201 caused by the adjustment unit 201 being stuck by a sticky foreign matter. More specifically, the method of adjusting the volume of air chamber of this embodiment further comprises following steps.

Step S40: control unit 200 executes the anomaly-detecting module 35 to start to adjust the inlet-outlet distance.

Step S41: control unit 200 detects using the anomaly-detecting module 35 whether any abnormal situation happens when the inlet-outlet distanced is adjusted by the adjustment unit 201. For example, an abnormal increase in current of the adjustment unit 201 (indicating that there may be an obstacle stuck in the adjustment unit 201), the reading value of the sensing unit 203 does not change with the inlet-outlet distance, or an abnormal situation (such as an obstacle in the air chamber space 208) is detected by the sensing unit 203 (such as an obstacle detector), and so forth, but this specific example is not intended to limit the scope of the present disclosed example.

If there is no abnormal situation detected, the control unit 200 executes the step S41 again for continuous detection until the adjustment unit 201 completes the adjustment of the inlet-outlet distance.

If any abnormal situation is detected, the control unit 200 executes the step S42: the control unit 200 executes the anomaly-detecting module 35 controlling the adjustment unit 201 to discontinue adjusting the inlet-outlet distance.

In one of the exemplary embodiments, after discontinuing adjustment of the inlet-outlet distance, the control unit 200 may control the adjustment unit 201 using the anomaly-detecting module 35 to adjust the inlet-outlet distance in a reverse direction, such as reverting the inlet-outlet distance to the state before adjustment.

Thus, the device and method of the present invention can effectively detect the abnormal situation, and prevent the airflow-generating device from damage caused by continuously operating under the abnormal situation.

## Claims

1. An airflow-generating device, comprising:
a volume-adjustable air chamber, comprising:
an inlet structure (210);
an outlet structure (209), wherein an air chamber space (208) is formed between the inlet structure (210) and the outlet structure (209), and wherein a deflector structure (40,42,44) for adjusting pressure or direction of airflow is arranged on the outlet structure (210); and
an adjustment unit (201) configured for adjusting an inlet-outlet distance between the inlet structure (210) and the outlet structure (209) to adjust an air chamber volume of the adjustable air chamber; and
an airflow-generating unit (202) arranged in the volume-adjustable air chamber and configured for generating the airflow introduced from the inlet structure (210) into the air chamber space (208) and exhausted from the outlet structure (209);
**characterized by**
a control unit (200) electrically connected to the airflow-generating unit (202) and the adjustment unit (201), wherein the control unit (200) is configured to control the adjustment unit (201)
to stretch the inlet-outlet distance for increasing the air chamber volume to improve a noise level caused by the airflow when a rotation rate of the airflow-generating unit (202) speeds up, and
to shrink the inlet-outlet distance for reducing the air chamber volume to aggrandize the pressure and speed of the airflow when a rotation rate of the airflow-generating unit (202) slows down.

2. The airflow-generating device according to claim 1, wherein the adjustment unit (201) is a screw structure device, a belt driving device or a pneumatic telescopic rod device, and the airflow-generating unit (202) is a fan device.

3. The airflow-generating device according to claim 1 or 2, wherein the inlet structure (210) is fixedly arranged, and the adjustment unit (201) is connected to the outlet structure (209) and used to move the outlet structure (209) for adjusting the inlet-outlet distance.

4. The airflow-generating device according to any of the preceding claims, wherein the outlet structure (209) is fixedly arranged and the adjustment unit (201) is connected to the inlet structure (210) and used to move the inlet structure (210) for adjusting the inlet-outlet distance.

5. The airflow-generating device according to any of the preceding claims, wherein the deflector structure (40,42,44) comprises a plurality of holes (41) or stereo deflectors (43,45).

6. The airflow-generating device according to any of the preceding claims, further comprising a storage unit (204), which is electrically connected to the control unit (200) and records a mapping relationship between a plurality of rotation rate configurations for the airflow-generating unit (202) and a plurality of movement distances for the adjustment unit (201); wherein the control unit (200) further comprises an adjustment control module (31) configured to select one of the movement distances based on the mapping relationship and the rotation rate configuration currently used by the airflow-generating device (202), and to control the adjustment unit (201) to adjust the inlet-outlet distance based on the movement distance being selected.

7. The airflow-generating device according to any of the preceding claims, further comprising a sensing unit (203) electrically connected to the control unit (200), wherein the sensing unit (203) is arranged on the outlet structure (209) and used to sense a wind speed reading value or an air pressure reading value of the airflow flowing through the outlet structure (209) or to sense a noise reading value of the airflow flowing through the outlet structure (209).

8. The airflow-generating device according to claim 7, wherein the control unit (200) further comprises a module of optimizing performance (33) or a module of optimizing noise reduction (34); wherein
the module of optimizing performance (33) is configured to retrieve the wind speed reading values or air pressure reading values continuously from the sensing unit (203) and to control the adjustment unit (201) to stretch or shrink the inlet-outlet distance until the wind speed reading value is matched with a wind speed threshold condition or the air pressure reading value is matched with an air pressure threshold condition; or wherein
the module of optimizing noise reduction (34) is configured to retrieve the noise reading values continuously from the sensing unit (203) and to control the adjustment unit (201) to stretch or shrink the inlet-outlet distance until the noise reading value is matched with a noise threshold

9. The airflow-generating device according to any of the preceding claims, further comprising a functional unit (206), wherein the functional unit (206) is arranged at a position where the airflow flows through before the inlet structure (210), wherein the functional unit (206) is used to process the air before the inlet structure (210) for the airflow-generating unit (202) to introduce the air being processed into the volume-adjustable air chamber.

10. The airflow-generating device according to claim 9, wherein the functional unit (206) is an air purification device, an air heating device, an air-cooling device, an air dehumidification device, or a vacuum cleaner device.

11. A method for using the airflow-generating device according to any of claims 1 to 10, comprising following steps:
a) detecting a rotation rate of the airflow-generating unit (202);
b) retrieving a movement distance corresponding to the rotation rate currently changed of the airflow-generating unit (202) when the rotation rate of the airflow-generating unit (202) is changed; and
c) controlling the adjustment unit (201) to stretch or shrink the inlet-outlet distance based on the movement distance, wherein the inlet-outlet distance is stretched when the rotation rate of the airflow-generating unit (202) speeds up for increasing the air chamber volume to improve the noise level caused by the airflow, and wherein the inlet-outlet distance is shrunk when the rotation rate of the airflow-generating unit (202) slows down for reducing the air chamber volume to aggrandize the pressure and speed of the airflow.

12. The method according to claim 11, wherein the step b) comprises following steps:
b1) retrieving a mapping relationship between a plurality of rotation rate configurations for the airflow-generating unit (202) and a plurality of movement distances for the adjustment unit (201); and
b2) selecting one of the movement distances based on the mapping relationship and the rotation rate configuration currently used by the airflow-generating device (202).

13. The method according to claim 11 or 12, further comprising following steps:
d1) retrieving wind speed reading values or air pressure reading values at the outlet structure (209) continuously from a sensing unit (203) arranged on the outlet structure (209); and
d2) controlling the adjustment unit (201) to stretch or shrink the inlet-outlet distance until the wind speed reading value is matched with a wind speed threshold condition or the air pressure reading value is matched with an air pressure threshold condition.

14. The method according to any of claims 11 to 13, further comprising following steps:
e1) retrieving noise reading values at the outlet structure (209) continuously from a sensing unit (203) arranged on the outlet structure (209); and
e2) controlling the adjustment unit (201) to stretch or shrink the inlet-outlet distance until the noise reading value is matched with a noise threshold condition.

15. The method according to any of claims 11 to 14, further comprising:
step f) controlling the adjustment unit (201) to discontinue adjusting the inlet-outlet distance when any abnormal situation is detected during the inlet-outlet distance adjustment by the adjustment unit (201).

## Patentansprüche

1. Vorrichtung zur Erzeugung eines Luftstroms, umfassend:
eine volumenregulierbare Luftkammer, umfassend:
eine Einlassstruktur (210);
eine Auslassstruktur (209), wobei ein Luftkammerraum (208) zwischen der Einlassstruktur (210) und der Auslassstruktur (209) ausgebildet ist, und wobei eine Luftstrom-Leitstruktur (40, 42, 44) zum Einstellen des Drucks oder der Richtung des Luftstroms an der Auslassstruktur (210) angeordnet ist; und
eine Einstelleinheit (201), die zum Einstellen eines Einlass-Auslass-Abstands zwischen der Einlassstruktur (210) und der Auslassstruktur (209) ausgelegt ist, um ein Luftkammervolumen der einstellbaren Luftkammer einzustellen; und
eine Luftstromerzeugungseinheit (202), die in der volumeneinstellbaren Luftkammer angeordnet und zum Erzeugen des Luftstroms ausgelegt ist, der von der Einlassstruktur (210) in den Luftkammerraum (208) eingeführt und von der Auslassstruktur (209) ausgelassen wird;
**gekennzeichnet durch**
eine Steuereinheit (200), die elektrisch mit der Luftstromerzeugungseinheit (202) und der Einstelleinheit (201) gekoppelt ist, wobei die Steuereinheit (200) dazu ausgelegt ist, um die Einstelleinheit (201) zu steuern, sodass diese
den Einlass-Auslass-Abstand verlängert, um das Luftkammervolumen zu erhöhen, um einen durch den Luftstrom verursachten Geräuschpegel zu verbessern, wenn eine Drehzahl der Luftstrom-Erzeugungseinheit (202) sich erhöht, und
den Einlass-Auslass-Abstand verringert, um das Luftkammervolumen zu verringern, um den Druck und die Geschwindigkeit des Luftstroms zu erhöhen, wenn eine Drehzahl der Luftstromerzeugungseinheit (202) verringert wird.

2. Luftstromerzeugungsvorrichtung nach Anspruch 1, wobei die Einstelleinheit (201) eine Schraubenstrukturvorrichtung, eine Riemenantriebsvorrichtung oder eine pneumatische Teleskopstangenvorrichtung ist, und wobei die Luftstromerzeugungseinheit (202) eine Gebläsevorrichtung ist.

3. Luftstromerzeugungsvorrichtung nach Anspruch 1 oder 2, wobei die Einlassstruktur (210) ortsfest angeordnet ist und die Einstelleinheit (201) mit der Auslassstruktur (209) gekoppelt ist und dazu verwendet wird, um die Auslassstruktur (209) zur Einstellung des Einlass-Auslass-Abstands zu verstellen.

4. Luftstromerzeugungsvorrichtung nach einem der vorhergehenden Ansprüche, wobei die Auslassstruktur (209) ortsfest angeordnet ist und die Einstelleinheit (201) mit der Einlassstruktur (210) gekoppelt ist und dazu verwendet wird, um die Einlassstruktur (210) zum Einstellen des Einlass-Auslass-Abstands zu verstellen.

5. Luftstromerzeugungsvorrichtung nach einem der vorhergehenden Ansprüche, wobei die Luftstrom-Leitstruktur (40, 42, 44) eine Vielzahl von Löchern (41) oder Stereo-Leitbleche (43, 45) aufweist.

6. Luftstromerzeugungsvorrichtung nach einem der vorhergehenden Ansprüche, ferner umfassend eine Speichereinheit (204), die elektrisch mit der Steuereinheit (200) verbunden ist und eine Abbildungsbeziehung zwischen einer Mehrzahl von Drehzahlkonfigurationen für die Luftstromerzeugungseinheit (202) und einer Mehrzahl von Bewegungsabständen für die Einstelleinheit (201) speichert; wobei die Steuereinheit (200) ferner ein Einstellungs-Steuermodul (31) umfasst, das so ausgelegt ist, dass es eine der Bewegungsabstände auf der Grundlage der Abbildungsbeziehung und der Drehzahlkonfiguration auswählt, die aktuell von der Luftstromerzeugungsvorrichtung (202) verwendet wird, und die Einstelleinheit (201) so steuert, dass diese den Einlass-Auslass-Abstand auf der Grundlage des ausgewählten Bewegungsabstands anpasst.

7. Luftstromerzeugungsvorrichtung nach einem der vorhergehenden Ansprüche, die ferner eine Erfassungseinheit (203) umfasst, die elektrisch mit der Steuereinheit (200) verbunden ist, wobei die Erfassungseinheit (203) an der Auslassstruktur (209) angeordnet ist und dazu verwendet wird, um einen Windgeschwindigkeitsmesswert oder einen Luftdruckmesswert des durch die Auslassstruktur (209) strömenden Luftstroms zu erfassen oder um einen Geräuschmesswert des durch die Auslassstruktur (209) strömenden Luftstroms zu erfassen.

8. Luftstromerzeugungsvorrichtung nach Anspruch 7, wobei die Steuereinheit (200) ferner ein Modul zur Leistungsoptimierung (33) oder ein Modul zur Optimierung der Geräuschreduzierung (34) umfasst, wobei
das Modul zur Leistungsoptimierung (33) so ausgelegt ist, dass es die Windgeschwindigkeitsmesswerte oder Luftdruckmesswerte kontinuierlich von der Erfassungseinheit (203) abruft und die Einstelleinheit (201) so steuert, dass der Einlass-Auslass-Abstand vergrößert oder verkleinert wird, solange bis der Windgeschwindigkeitsmesswert mit einer Windgeschwindigkeits-Schwellwertbedingung übereinstimmt oder der Luftdruckmesswert mit einer Luftdruck-Schwellwertbedingung übereinstimmt; oder wobei
das Modul zur Optimierung der Geräuschreduzierung (34) so ausgelegt ist, dass es die Geräuschmesswerte kontinuierlich von der Erfassungseinheit (203) abruft und die Einstelleinheit (201) so steuert, dass diese den Einlass-Auslass-Abstand streckt oder verringert, solange bis der Geräuschmesswert mit einer Geräusch-Schwellwertbedingung übereinstimmt.

9. Luftstromerzeugungsvorrichtung nach einem der vorhergehenden Ansprüche, ferner umfassend eine Funktionseinheit (206), wobei die Funktionseinheit (206) an einer Position angeordnet ist, durch die der Luftstrom vor der Einlassstruktur (210) strömt, wobei die Funktionseinheit (206) dazu verwendet wird, um die Luft vor der Einlassstruktur (210) für die Luftstromerzeugungseinheit (202) zu konditionieren, um die zu konditionierende Luft in die volumenregulierbare Luftkammer einzuleiten.

10. Luftstromerzeugungsvorrichtung nach Anspruch 9, wobei die Funktionseinheit (206) eine Luftreinigungsvorrichtung, eine Lufterwärmungsvorrichtung, eine Luftkühlungsvorrichtung, eine Luftentfeuchtungsvorrichtung oder eine Staubsaugervorrichtung ist.

11. Verfahren unter Verwendung der Luftstromerzeugungsvorrichtung nach einem der Ansprüche 1 bis 10, umfassend die folgenden Schritte:
a) Erfassen einer Drehzahl der Luftstromerzeugungseinheit (202);
b) Abrufen eines Bewegungsabstands, der der aktuell geänderten Drehzahl der Luftstromerzeugungseinheit (202) entspricht, wenn die Drehzahl der Luftstromerzeugungseinheit (202) geändert wird; und
c) Steuern der Einstelleinheit (201), um den Einlass-Auslass-Abstand basierend auf dem Bewegungsabstand zu vergrößern oder zu verkleinern, wobei der Einlass-Auslass-Abstand vergrößert wird, wenn die Drehzahl der Luftstrom-Erzeugungseinheit (202) erhöht wird, um das Luftkammervolumen zu vergrößern, um den durch den Luftstrom verursachten Geräuschpegel zu verbessern, und wobei der Einlass-Auslass-Abstand verkleinert wird, wenn die Drehzahl der Luftstrom-Erzeugungseinheit (202) verringert wird, um das Luftkammervolumen zu verringern, um den Druck und die Geschwindigkeit des Luftstroms zu vergrößern.

12. Verfahren nach Anspruch 11, wobei der Schritt b) die folgenden Schritte umfasst:
b1) Abrufen einer Abbildungsbeziehung zwischen einer Mehrzahl von Drehzahlkonfigurationen für die Luftstromerzeugungseinheit (202) und einer Mehrzahl von Bewegungsabständen für die Einstelleinheit (201); und
b2) Auswählen eines der Bewegungsabstände auf der Grundlage der Abbildungsbeziehung und der Drehzahlkonfiguration, die aktuelle von der Luftstromerzeugungseinheit (202) verwendet wird.

13. Verfahren nach Anspruch 11 oder 12, das ferner die folgenden Schritte umfasst:
d1) kontinuierliches Abrufen von Windgeschwindigkeitsmesswerten oder Luftdruckmesswerten an der Auslassstruktur (209) von einer an der Auslassstruktur (209) angeordneten Erfassungseinheit (203); und
d2) Steuern der Einstelleinheit (201), um den Einlass-Auslass-Abstand zu vergrößern oder zu verkleinern, solange bis der Windgeschwindigkeitsmesswert mit einer Windgeschwindigkeits-Schwellwertbedingung übereinstimmt oder der Luftdruckmesswert mit einer Luftdruck-Schwellwertbedingung übereinstimmt.

14. Verfahren nach einem der Ansprüche 11 bis 13, das ferner die folgenden Schritte umfasst:
e1) kontinuierliches Abrufen von Geräuschmesswerten an der Auslassstruktur (209) von einer an der Auslassstruktur (209) angeordneten Erfassungseinheit (203); und
e2) Steuern der Einstelleinheit (201), um den Einlass-Auslass-Abstand zu vergrößern oder zu verkleinern, bis der Geräuschmesswert mit einer Geräusch-Schwellwertbedingung übereinstimmt.

15. Verfahren nach einem der Ansprüche 11 bis 14, ferner umfassend:
Schritt f) Steuern der Einstelleinheit (201), um die Einstellung des Einlass-Auslass-Abstandes zu unterbrechen, wenn während der Einstellung des Einlass-Auslass-Abstandes durch die Einstelleinheit (201) eine abnormale Situation erkannt wird.

## Revendications

1. Un dispositif générateur de flux d'air, comprenant :
une chambre à air à volume réglable, comprenant :
une structure d'entrée (210) ;
une structure de sortie (209), dans laquelle un espace de chambre à air (208) est formé entre la structure d'entrée (210) et la structure de sortie (209), et dans laquelle une structure déflectrice (40, 42, 44) pour ajuster la pression ou la direction du flux d'air est disposée sur la structure de sortie (210) ; et
une unité de réglage (201) configurée pour régler une distance entrée-sortie entre la structure d'entrée (210) et la structure de sortie (209) afin de régler un volume de chambre à air de la chambre à air réglable ; et
une unité de génération de flux d'air (202) disposée dans la chambre à air à volume réglable et configurée pour générer le flux d'air introduit par la structure d'entrée (210) dans l'espace de chambre à air (208) et évacué par la structure de sortie (209) ;
**caractérisé par**
une unité de commande (200) connectée électriquement à l'unité de génération du flux d'air (202) et à l'unité de réglage (201), dans laquelle l'unité de commande (200) est configurée pour contrôler l'unité de réglage (201)
pour étirer la distance entrée-sortie afin d'augmenter le volume de la chambre à air pour améliorer le niveau de bruit causé par le flux d'air lorsqu'une vitesse de rotation de l'unité de génération de flux d'air (202) s'accélère, et
de réduire la distance entrée-sortie pour diminuer le volume de la chambre d'air afin d'augmenter la pression et la vitesse du flux d'air lorsque la vitesse de rotation de l'unité de génération du flux d'air (202) ralentit.

2. Le dispositif générateur de flux d'air selon la revendication 1, dans lequel l'unité de réglage (201) est un dispositif à structure à vis, un dispositif à entraînement par courroie ou un dispositif à tige télescopique pneumatique, et l'unité de génération de flux d'air (202) est un dispositif à ventilateur.

3. Le dispositif générateur de flux d'air selon la revendication 1 ou 2, dans lequel la structure d'entrée (210) est disposée de manière fixe, et l'unité de réglage (201) est connectée à la structure de sortie (209) et utilisée pour déplacer la structure de sortie (209) afin d'ajuster la distance entrée-sortie.

4. Le dispositif générateur de flux d'air selon l'une quelconque des revendications précédentes, dans lequel la structure de sortie (209) est disposée de manière fixe et l'unité de réglage (201) est connectée à la structure d'entrée (210) et utilisée pour déplacer la structure d'entrée (210) afin d'ajuster la distance entrée-sortie.

5. Le dispositif générateur de flux d'air selon l'une des revendications précédentes, dans lequel la structure déflectrice (40, 42, 44) comprend une pluralité de trous (41) ou des déflecteurs stéréo (43, 45).

6. Le dispositif générateur de flux d'air selon l'une quelconque des revendications précédentes, comprenant en outre une unité de stockage (204), qui est connectée électriquement à l'unité de commande (200) et enregistre une relation de correspondance entre une pluralité de configurations de taux de rotation pour l'unité de génération de flux d'air (202) et une pluralité de distances de déplacement pour l'unité de réglage (201) ; l'unité de commande (200) comprend en outre un module de commande de réglage (31) configuré pour sélectionner l'une des distances de déplacement sur la base de la relation de mappage et de la configuration de taux de rotation actuellement utilisée par le dispositif générateur de flux d'air (202), et pour commander l'unité de réglage (201) afin d'ajuster la distance entrée-sortie sur la base de la distance de déplacement sélectionnée.

7. Le dispositif générateur de flux d'air selon l'une quelconque des revendications précédentes, comprenant en outre une unité de détection (203) connectée électriquement à l'unité de commande (200), dans laquelle l'unité de détection (203) est disposée sur la structure de sortie (209) et utilisée pour détecter une valeur de lecture de la vitesse du vent ou une valeur de lecture de la pression atmosphérique du flux d'air s'écoulant à travers la structure de sortie (209) ou pour détecter une valeur de lecture du bruit du flux d'air s'écoulant à travers la structure de sortie (209).

8. Le dispositif générateur de flux d'air selon la revendication 7, dans lequel l'unité de commande (200) comprend en outre un module d'optimisation des performances (33) ou un module d'optimisation de la réduction du bruit (34) ; dans lequel
le module d'optimisation des performances (33) est configuré pour récupérer les valeurs de lecture de la vitesse du vent ou les valeurs de lecture de la pression atmosphérique en continu à partir de l'unité de détection (203) et pour commander l'unité de réglage (201) afin d'étirer ou de réduire la distance entrée-sortie jusqu'à ce que la valeur de lecture de la vitesse du vent corresponde à une condition de seuil de vitesse du vent ou que la valeur de lecture de la pression atmosphérique corresponde à une condition de seuil de pression atmosphérique ; ou dans lequel
le module d'optimisation de la réduction du bruit (34) est configuré pour récupérer en continu les valeurs de lecture du bruit à partir de l'unité de détection (203) et pour commander l'unité de réglage (201) afin d'étirer ou de réduire la distance entrée-sortie jusqu'à ce que la valeur de lecture du bruit corresponde à une condition de seuil de bruit.

9. Le dispositif générateur de flux d'air selon l'une quelconque des revendications précédentes, comprenant en outre une unité fonctionnelle (206), dans laquelle l'unité fonctionnelle (206) est disposée à une position où le flux d'air passe avant la structure d'entrée (210), dans laquelle l'unité fonctionnelle (206) est utilisée pour traiter l'air avant la structure d'entrée (210) pour l'unité de génération de flux d'air (202) afin d'introduire l'air traité dans la chambre d'air à volume ajustable.

10. Le dispositif générateur de flux d'air selon la revendication 9, dans lequel l'unité fonctionnelle (206) est un dispositif de purification de l'air, un dispositif de chauffage de l'air, un dispositif de refroidissement de l'air, un dispositif de déshumidification de l'air, ou un dispositif d'aspirateur.

11. Un procédé utilisant le dispositif générateur de flux d'air selon l'une quelconque des revendications 1 à 10, comprenant les étapes suivantes :
a) détection d'une vitesse de rotation de l'unité de génération de flux d'air (202) ;
b) récupération d'une distance de déplacement correspondant à la vitesse de rotation actuellement modifiée de l'unité de génération de flux d'air (202) lorsque la vitesse de rotation de l'unité de génération de flux d'air (202) est modifiée ; et
c) commander l'unité de réglage (201) pour étirer ou réduire la distance entrée-sortie en fonction de la distance de déplacement, la distance entrée-sortie étant étirée lorsque la vitesse de rotation de l'unité de génération de flux d'air (202) s'accélère pour augmenter le volume de la chambre d'air afin d'améliorer le niveau de bruit causé par le flux d'air, et la distance entrée-sortie étant réduite lorsque la vitesse de rotation de l'unité de génération de flux d'air (202) ralentit pour réduire le volume de la chambre d'air afin d'augmenter la pression et la vitesse du flux d'air.

12. Le procédé selon la revendication 11, dans laquelle l'étape b) comprend les étapes suivantes :
b1) recherche d'une relation de correspondance entre une pluralité de configurations de taux de rotation pour l'unité de génération de flux d'air (202) et une pluralité de distances de déplacement pour l'unité de réglage (201) ; et
b2) sélection d'une des distances de déplacement sur la base de la relation de correspondance et de la configuration de la vitesse de rotation actuellement utilisée par le dispositif générateur de flux d'air (202).

13. Le procédé selon la revendication 11 ou 12, comprenant en outre les étapes suivantes
d1) récupération des valeurs de lecture de la vitesse du vent ou des valeurs de lecture de la pression atmosphérique au niveau de la structure de sortie (209) en continu à partir d'une unité de détection (203) disposée sur la structure de sortie (209) ; et
d2) commander l'unité de réglage (201) pour étirer ou réduire la distance entrée-sortie jusqu'à ce que la valeur de lecture de la vitesse du vent corresponde à une condition seuil de vitesse du vent ou que la valeur de lecture de la pression de l'air corresponde à une condition seuil de pression de l'air.

14. Le procédé selon l'une des revendications 11 à 13, comprenant en outre les étapes suivantes :
e1) récupération des valeurs de lecture du bruit au niveau de la structure de sortie (209) en continu à partir d'une unité de détection (203) disposée sur la structure de sortie (209) ; et
e2) commander l'unité de réglage (201) pour étirer ou réduire la distance entrée-sortie jusqu'à ce que la valeur de lecture du bruit corresponde à une condition de seuil de bruit.

15. Le procédé selon l'une quelconque des revendications 11 à 14, comprenant en outre :
étape f) commander l'unité de réglage (201) pour interrompre le réglage de la distance entrée-sortie lorsqu'une situation anormale est détectée pendant le réglage de la distance entrée-sortie par l'unité de réglage (201).
